# EUROPEAN PATENT APPLICATION

(11) **EP 4 708 810 A1**
(43) Date of publication of application: **11.03.2026**
(21) Application number: 24815961.8
(22) Date of filing: 23.05.2024
(51) Int. Cl.: H04L 61/256, H04L 61/2514, H04L 67/51, H04L 61/5007

(54) **METHOD AND APPARATUS FOR MONITORING IP ADDRESS OF UE**

(30) Priority: 26.05.2023 KR 20230068154
(71) Applicant: Samsung Electronics Co., Ltd., Suwon-si, Gyeonggi-do 16677 (KR)
(72) Inventor: KWEON, Kisuk, Suwon-si Gyeonggi-do 16677 (KR); GUPTA, Naman, Suwon-si Gyeonggi-do 16677 (KR)
(74) Representative: Gulde & Partner
(86) International application number: PCT/KR2024/095848
(87) International publication number: WO 2024/248587

(57) **Abstract**

A method performed by a user plane function (UPF) entity in a wireless communication system, according to one embodiment of the present disclosure, comprises the steps of: receiving, from an application function (AF) entity, a subscription request for a service for monitoring an internet protocol (IP) address of a UE; transmitting a response to the subscription request to the AF entity; and if an event occurs in a network address translation (NAT) mapping table entry for supporting the service, transmitting a notification for the event to the AF entity before a timer tagged to the entry expires, wherein the event includes at least one among an event associated with the expiry of the timer tagged to the entry, an event associated with deletion of the entry, and an event for assigning a new public IP address to the UE, and the notification includes at least one among the remaining time of the timer or the new public IP address assigned to the UE.

## Description

### [Technical Field]

The disclosure relates to a method of monitoring an Internet protocol (IP) address of a user equipment (UE) in a wireless communication system and a method thereof. Specifically, the disclosure proposes a method and an apparatus for monitoring an IP address of a UE changed by network address translation (NAT) in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, and with the advancement of mobile communication systems enabling the provision of diverse services, there is a requirement for measures to deliver these services effectively.

### [Disclosure of Invention]

### [Technical Problem]

Embodiments set forth herein are to provide an apparatus and a method capable of effectively providing services in a wireless communication system.

### [Solution to Problem]

A method performed by a user plane function (UPF) entity in a wireless communication system according to an embodiment of the disclosure may include receiving a subscription request for a service of monitoring an Internet protocol (IP) address of a user equipment (UE) from an application function (AF) entity, transmitting a response to the subscription request to the AF entity, and in case that an event occurs in a network address translation (NAT) mapping table entry for supporting the service, transmitting a notification for the event to the AF entity before a timer tagged in the entry expires, wherein the event may include at least one of an event associated with expiration of the timer tagged in the entry, an event associated with deletion of the entry, and an event of allocating a new public IP address to the UE, and wherein the notification may include at least one of a remaining time of the timer or the new public IP address allocated to the UE.

A method performed by an application function (AF) entity in a wireless communication system according to an embodiment of the disclosure may include transmitting a subscription request for a service of monitoring an Internet protocol (IP) address of a UE to a user plane function (UPF) entity, receiving a response to the subscription request from the UPF entity, and in case that an event occurs in an entry of a network address translation (NAT) mapping table for supporting the service, receiving a notification for the event from the UPF entity before a timer tagged in the entry expires, wherein the event may include at least one of an event associated with expiration of the timer tagged in the entry, an event associated with deletion of the entry, and an event of allocating a new public IP address to the UE, and wherein the notification may include at least one of a remaining time of the timer or the new public IP address allocated to the UE.

A user plane function (UPF) entity in a wireless communication system, according to an embodiment of the disclosure may include a transceiver and a controller coupled with the transceiver, wherein the controller may be configured to receive a subscription request for a service of monitoring an Internet protocol (IP) address of a user equipment (UE) from an application function (AF) entity, transmit a response to the subscription request to the AF entity, and in case that an event occurs in a network address translation (NAT) mapping table entry for supporting the service, transmit a notification for the event to the AF entity before a timer tagged in the entry expires, wherein the event may include at least one of an event associated with expiration of the timer tagged in the entry, an event associated with deletion of the entry, and an event of allocating a new public IP address to the UE, and wherein the notification may include at least one of a remaining time of the timer or the new public IP address allocated to the UE.

An application function (AF) entity in a wireless communication system according to an embodiment of the disclosure may include a transceiver and a controller coupled with the transceiver, wherein the controller may be configured to transmit a subscription request for a service of monitoring an Internet protocol (IP) address of a user equipment (UE) to a user plane function (UPF) entity, receive a response to the subscription request from the UPF entity, and in case that an event occurs in an entry of a network address translation (NAT) mapping table for supporting the service, receive a notification for the event from the UPF entity before a timer tagged in the entry expires, wherein the event may include at least one of an event associated with expiration of the timer tagged in the entry, an event associated with deletion of the entry, and an event of allocating a new public IP address to the UE, and wherein the notification may include at least one of a remaining time of the timer or the new public IP address allocated to the UE.

### [Advantageous Effects of Invention]

An embodiment of the disclosure provides an apparatus and a method capable of effectively providing a monitoring service of an IP address of a user equipment (UE) in a wireless communication system. According to an embodiment of the disclosure, it is possible to monitor an IP address of a UE changed by NAT of a 5G core network. According to an embodiment of the disclosure, it is possible to notify of a procedure for subscribing to a service of monitoring an IP address of a UE and the occurrence of an event. Furthermore, according to an embodiment of the disclosure, schemes for subscribing to a service of monitoring an IP address of a UE, based on a control plane (CP) and based on a user plane (UP), are proposed.

### [Brief Description of Drawings]

FIG. 1 illustrates a structure of a 5G network according to an embodiment of the disclosure.
FIG. 2 illustrates a transmission control protocol/Internet protocol (TCP/IP) protocol stack and an IP layer (based on PIv4) datagram header (packet header).
FIG. 3 illustrates an IP layer including a UPF control message protocol (UCMP) protocol.
FIG. 4 illustrates IP datagram including a UCMP protocol message and a UCMP protocol message format.
FIG. 5 illustrates an example of the operation of the UCMP protocol.
FIG. 6 is a diagram illustrating a scheme for subscribing to a user plane function (UPF) service, based on a CP.
FIG. 7 is a diagram illustrating a mobile communication network to which NAT is applied.
FIG. 8 illustrates a UE IP address monitoring service signaling procedure.
FIG. 9 illustrates a structure of a UE according to an embodiment of the disclosure.
FIG. 10 illustrates a structure of a base station (BS) according to an embodiment of the disclosure.
FIG. 11 illustrates a structure of a network entity according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

In describing embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

To meet the demand for wireless data traffic having increased since deployment of 4th generation (4G) communication systems, efforts have been made to develop an improved 5G or pre-5G communication system. Therefore, the 5G or pre-5G communication system is also called a "beyond 4G network" communication system or a "post long term evolution (post LTE)" system.

The 5G communication system is considered to be implemented in ultrahigh frequency (mmWave) bands, (e.g., 60GHz bands) so as to accomplish higher data rates. To decrease propagation loss of the radio waves and increase the transmission distance of radio waves in the ultrahigh frequency bands, beamforming, massive multiple-input multiple-output (massive MIMO), full dimensional MIMO (FD-MIMO), array antenna, analog beam forming, large scale antenna techniques are under discuss ion in the 5G communication systems.

In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like.

In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The 5G system is considering supports for more various services as compared to the conventional 4G system. For example, the most representative services of the 5G system include an eMBB service, a URLLC service, a massive MIMO service, an evolved multimedia broadcast/multicast service (eMBMS), and the like. A system providing the URLLC service may be referred to as a URLLC system, and a system providing the eMBB service may be referred to as an eMBB system. The terms "service" and "system" may be interchangeably used.

Among these services, the URLLC service is a service that is newly considered in the 5G system, in contrast to the existing 4G system, and requires to meet ultrahigh reliability (e.g., packet error rate of about 10-5) and low latency (e.g., about 0.5msec) conditions as compared to the other services. To meet these strict conditions required therefor, the URLLC service may need to apply a shorter transmission time interval (TTI) than the eMBB service, and various operating schemes employing the same are now under consideration.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched.

Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

With the advance of wireless communication systems as described above, various services can be provided, and in particular, there is a need for ways to efficiently use a non-public network (NPN).

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5ms, and may also require a packet error rate of 10⁻⁵ or less. However, the above-described mMTC, URLLC, and eMBB are merely examples of different types of services, and service types to which the disclosure is applied are not limited to the above examples.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

In the following description, a base station is an entity that allocates resources to terminals, and may be at least one of a Node B, a base station (BS), an eNode B, a gNode B, a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project long term evolution (3GPP LTE) standards may be used for the sake of descriptive convenience. However, the disclosure is not limited by these terms and names, and may be applied in the same way to systems that conform other standards.

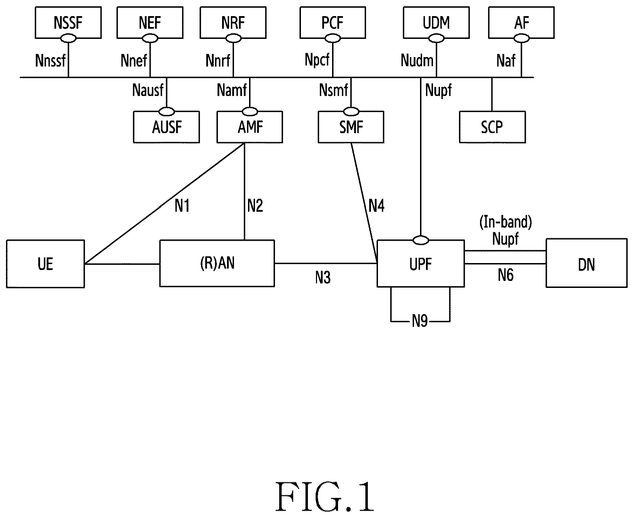

FIG. 1 illustrates a structure of a 5G network according to an embodiment of the disclosure. Network entities or network nodes constituting the 5G network are described as follows.

A (radio) access network ((R)AN) is an entity that performs wireless resource allocation for a UE, and may include at least one of an eNode B, a Node B, a base station (BS), a next generation radio access network (NG-RAN), a 5G-AN, a wireless access unit, a base station controller, or a node on the network. A terminal may include a user equipment (UE), a next generation UE (NG UE), a mobile station (MS), a cellular phone, a smartphone, a computer, or a multimedia system capable of performing a communication function. Also, in the following description of embodiments of the disclosure, 5G systems will be described by way of example, but the embodiments of the disclosure may also be applied to other communication systems having similar technical backgrounds. Moreover, based on determinations by those skilled in the art, the embodiments of the disclosure may also be applied to other communication systems through some modifications without significantly departing from the scope of the disclosure.

As wireless communication systems evolve from 4G systems to 5G systems, a new core network (CN) referred to as a next generation core (NG core) or a 5G core network (5GC) has been defined. The new core network may fully virtualize existing network entities (NEs) into network functions (NFs). According to an embodiment of the disclosure, a network function may refer to a network entity, a network component, and a network resource.

According to an embodiment of the disclosure, the 5GC may include NFs illustrated in FIG. 1. It is obvious that the disclosure is not limited to the example of FIG. 1 and the 5GC may include a larger or smaller number of NFs than the NFs illustrated in FIG. 1.

According to an embodiment of the disclosure, an access and mobility management function (AMF) may be a network function that manages mobility of a UE.

According to an embodiment of the disclosure, a session management function (SMF) may be a network function that manages packet data network (PDN) connection provided to a user equipment (UE). The PDN connection may be referred to as a protocol data unit (PDU) session.

According to an embodiment of the disclosure, a policy control function (PCF) may be a network function that applies a service policy, a charging policy, and a PDU session policy of a mobile communication service provider to a UE.

According to an embodiment of the disclosure, a unified data management (UDM) may be a network function that stores information about a subscriber.

According to an embodiment of the disclosure, a network exposure function (NEF) may be a function that provides information about a UE to a server located outside the 5G network. In addition, the NEF may provide a function that provides information required for a service to the 5G network and stores same in a UDR.

According to an embodiment of the disclosure, a user plane function (UPF) may be a function that serves as a gateway for delivering user data (PDU) to a gata network (DN).

According to an embodiment of the disclosure, a network repository function (NRF) may perform an NF discovery function.

According to an embodiment of the disclosure, an authentication server function (AUSF) may perform UE authentication in a 3GPP access network and a non-3GPP access network.

According to an embodiment of the disclosure, a network slice selection function (NSSF) may perform a function that selects a network slice instance provided to a UE.

According to an embodiment of the disclosure, the data network (DN) may be a data network through which a UE transmits and receives data to use a service of a network service provider or a 3rd party service.

As used herein, equipment (e.g., application function (AF) located in the DN may use an N6 interface (user plane, in-band) to exchange control messages with the UPF.

A user plane (UP)-based UPF service subscription procedure is as follows.

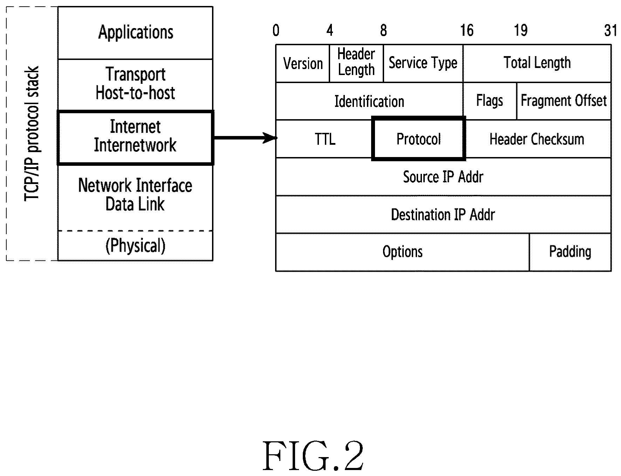

FIG. 2 illustrates a TCP/IP protocol stack and an IP layer (PIv4-based) datagram header (packet header).

The UPF and AF are each a router and a server device, and use a TCP/IP protocol stack via the N6 interface to transmit user data. The UPF is router equipment and thus inherently includes an IP layer (Internet protocol layer) at the basic level. Accordingly, an in-band protocol that transmits a control message between the UPF and the AF may exist on the IP layer.

The IP datagram header may include a protocol field. In the case of IPv6, a next header field performs this function. An IPv4 protocol is described as an example, in the disclosure, but the disclosure may be applied to an IPv6 protocol. The protocol field (next header field in the case of IPv6) is an 8-bit field and may define a higher-layer protocol using services of the IP layer. Various types of higher-layer protocols, such as TCP, user datagram protocol (UDP), Internet control message protocol (ICMP), and Internet group management protocol (IGMP), use the IP layer.

The disclosure is described based on a UCMP protocol which has been pre-filed as the in-band protocol. However, the disclosure is not limited to the use of only the UCMP protocol, since other in-band protocols may be used.

The UCMP protocol is assigned one of the protocol fields which have not been used yet. For example, 144 is allocated in the disclosure. A new protocol name and an IP protocol number may be changed.

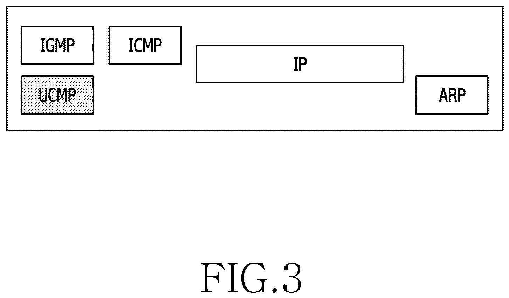

FIG. 3 illustrates an IP layer including a UCMP protocol (based on IPv4, but the same applies to IPv6). The UCMP protocol is included in the IP layer, like the existing IGMP, ICMP, and ARP protocols. The UCMP may also exist above the IP layer.

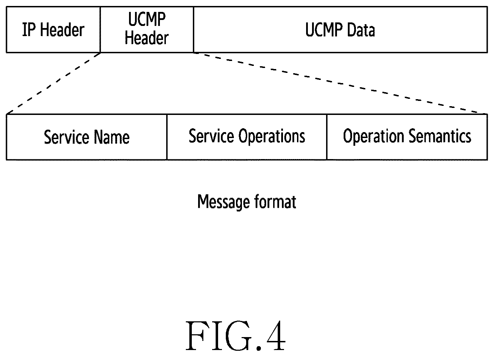

FIG. 4 illustrates IP datagram including a UCMP protocol message and a UCMP protocol message format. A value of the protocol field of the IP header is 144, which indicates the UCMP protocol. A UPF service name, a service operation, and an operation semantic value are input into the UCMP header. The UCMP data includes parameter values required for the UPF service.

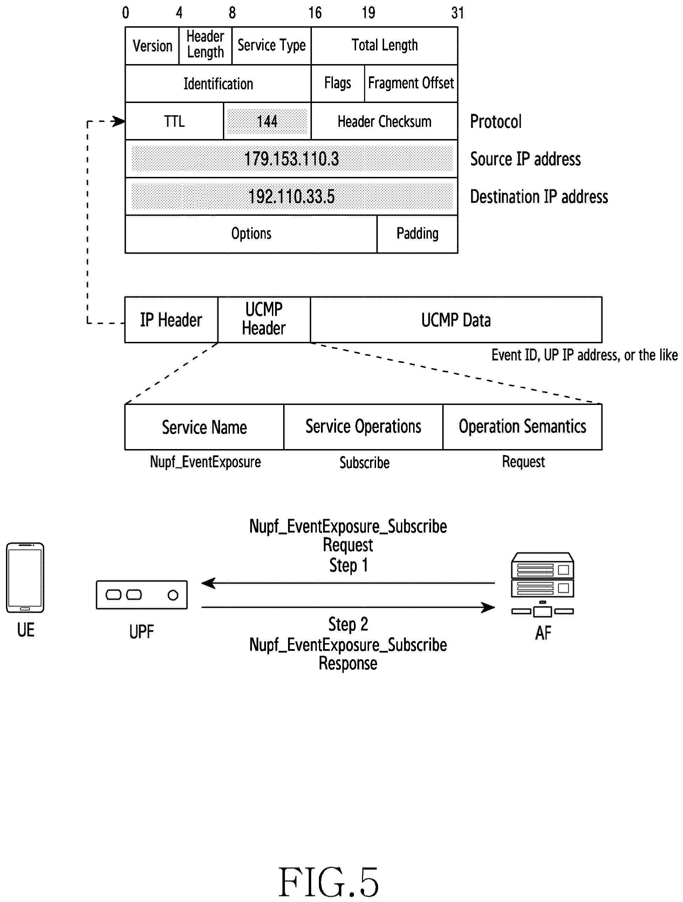

FIG. 5 illustrates an example of the operation of the UCMP protocol.

The AF, which is an external server, makes a request for subscribing to a UPF service in order to use a specific service of the UPF. To this end, a UCMP protocol message is generated and inserted into the IP datagram to be transmitted. A value of "144" is input into the protocol field of the IP header to indicate that the present IP datagram includes the UCMP message. "179.153.110.3" which is an IP address of the AF is input into a source IP address field. "192.110.33.5" which is the IP address of the UE is input into a destination address field.

The following values are input into the UCMP header. A value of "Nupf_EventExposure" which is the UPF service name is input into a service name field. A value of "Subscribe" indicating service subscription is input in a service operations field. A value of "Request" indicating a service request is input into an operation semantics field. The UCMP data field includes parameter values required for the corresponding service subscription request. The parameter values may be various values such as an event ID, a UE IP address, a generic public subscription identifier (GPSI), a data network name (DNN), and single network slice selection assistance information (S-NSSAI).

The corresponding IP datagram is transmitted to a PDU session anchor (PSA) UPF which is a UE home router. The UPF processes the header of the IP datagram. At this time, since the value of the protocol field is '144', the UPF recognizes that the IP datagram includes the UCMP message. That is, the corresponding IP datagram does not include user data to be transmitted to the user (UE) but includes the UCMP message make a request for a service to the UPF serving the corresponding UE, and thus the UPF reads the UCMP message and processes the requested service subscription. The UPF discards the corresponding IP datagram without transmitting the same to the UE. The UPF transmits a result of processing of the requested service subscription to the AF, and to this end, generates the UCMP message. The following values are input into the UCMP header. A value of "Nupf_EventExposure" which is the UPF service name is input into a service name field. A value of "Subscribe" which is service subscription is input in a service operations field. A value of "Response" which is a response to the service request is input into an operation semantics field. The UCMP data field includes parameter values required for the corresponding response to the service subscription request.

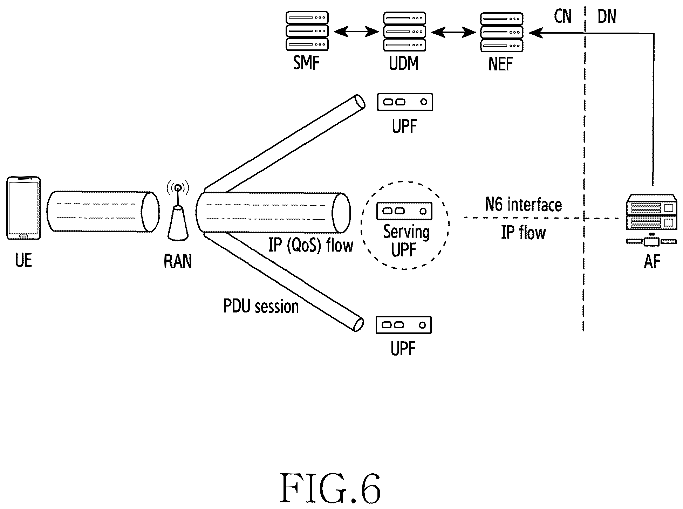

FIG. 6 is a diagram illustrating a scheme of subscribing to a UPF service, based on a control plane (CP).

The UE has generated three PDU sessions, and each PDU session is handled by a respective different UPF. At this time, the AF wants to subscribe to a UPF event exposure service with a UPF in charge of an IP flow that the AF itself is serving, that is, a serving UPF. Since a control message is transmitted based on the control plane (CP), the AF transmits a service subscription request message to the NEF. At this time, the AF may transmit information such as an ID of the UE (for example, GPSI), an IP address of the UE, and S-NSSAI as parameters. The NEF cannot find the serving UPF through the information transmitted by the AF and thus transmits the subscription request message to the UDM. The UDM may find an SMF responsible for the serving UPF by using the ID of the UE or the IP address of the UE. Ultimately, the service subscription request message is transferred to the final UPF via the SMF.

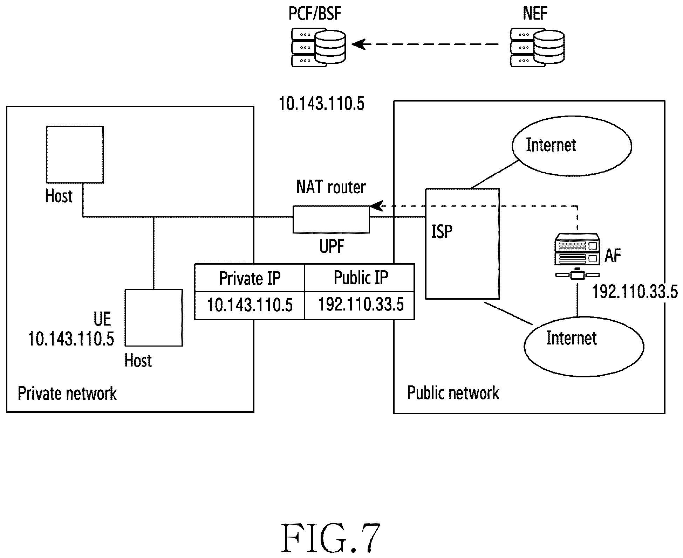

FIG. 7 is a diagram illustrating a mobile communication network to which NAT is applied.

Most mobile network operators (MNOs) have a cost issue, so in the mobile network, a private IP address is allocated to UEs, and when the user's data is transmitted to the outside, that is, the data network (DN), a public IP address that can be used in the DN, is allocated via network address translation (NAT).

When the public IP address is allocated to the UE through the NAT, the private IP address of the UE and the public IP address are stored in a mapping table for recording the private IP address and the public IP address of the UE so that the private IP address and the public IP address of the UE may be changed. As illustrated in FIG. 7, the UE may have allocation of a private IP address of 10.143.110.5 which can be used in the mobile communication network, that is, the private network. The private IP address is valid only in the private network. At this time, the data which the UE transmits to the outside passes through the UPF and the NAT. Through NAT, the private IP address of the UE that is valid only in the private network and is not valid in an external network, that is, a public network, is changed to the public IP address 192.110.33.5 and transmitted to the external network. At this time, the NAT records the private IP address and the public IP address of the UE in the mapping table.

When the AF corresponding to an external server receives a packet of the UE, the IP address of the UE is 192.110.33.5, which is the public IP address. Thereafter, when the AF transmits data to the UE by using this public IP address, the data packet is transmitted to the UPF that functions as a home router of the UE. For example, the UPF may include a NAT function inside thereof in order to function as the home router of the UE. At this time, the NAT translates the IP address of the UE to 10.143.110.5 that is a private IP address valid in the private network, based on the mapping table and transmits the data to the UE.

In the above-described NAT operation, a 1:1 NAT scheme (or static NAT scheme) in which the private IP address and the public IP address are mapped in a 1:1 manner is illustrated as an example, but this is only an example, and the disclosure is not limited to the 1:1 NAT scheme. In various embodiments of the disclosure, various NAT schemes, such as a one-to-many NAT scheme (or dynamic NAT scheme) and a NAT scheme using an IP port number (or NAPT or PAT scheme), may be used.

For example, the following problems may occur in a mobile communication network using the NAT. In FIG. 7, the NAT allocates the public IP address to the UE and records the same in the mapping table. When the data corresponding to an entry (a pair of a private IP address and a public IP address) stored in the mapping table is transmitted, a timer tagged to the entry is refreshed. That is, a timer is tagged whenever an entry is generated, and when the timer expires, the entry is deleted. That is, information on the pair of the private IP address and the public IP address of the corresponding UE is deleted. If the data corresponding to the entry is transmitted before the timer expires, the timer is reset. Here, the problem is that, if the external server (AF) provides a push service or an instant messenger (IM) service, the external server must transmit data to the UE when data to be transmitted to the UE is generated. If the mapping table entry within the NAT generated by communication between the UE and the server has been deleted, the NAT cannot translate the data received from the server to the UE private IP address, and eventually the data cannot be transmitted.

In order to solve the above-mentioned problems caused by NAT, a method of periodically resetting the timer of the entry by transmitting a dummy message called a keepalive message to the IE to periodically reset the timer of the entry may be used. This method eventually causes network congestion and generates overhead in the mobile communication network.

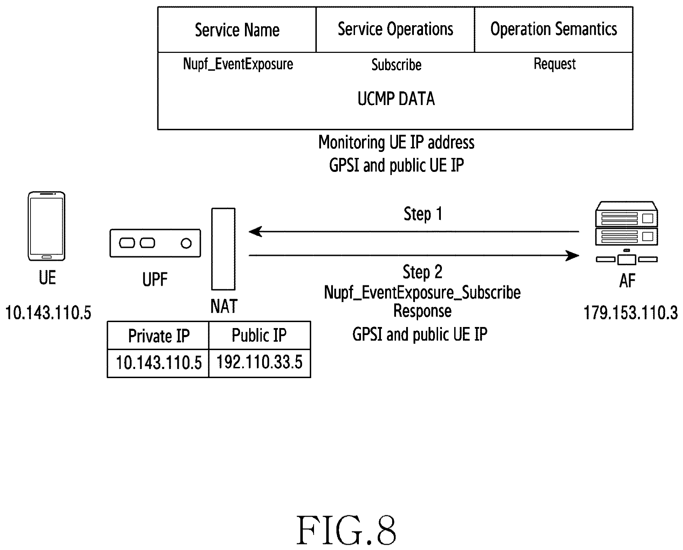

FIG. 8 illustrates a UE IP address monitoring service signaling procedure.

Although FIG. 8 has been described as an example based on a UP-based UPF service subscription procedure, this is only an example, and the method of the disclosure is not limited to the case of the UP-based UPF service subscription procedure. The method according to various embodiments may also be used in the case based on a CP-based UPF service subscription procedure.

The UE may receive allocation of a private IP address of 10.143.110.5 from a mobile communication network (for example, UPF). The UE transmits data to make a request for a service to an external server (AF). This packet is transferred to the AF via the UPF/NAT. At this time, the NAT may allocate 192.110.33.5 which is the public IP address available in an external network, that is, the public network, as the private IP address of the UE, translate the public IP address to the public IP address to which a source IP address of a UE packet address is allocated, and transmit the packet to the external network. The packet reaches the AF.

The IP address of the UE known to the AF is a public IP address of 192.110.33.5. The service requested by the UE may include a push service or an instant messaging (IM) service, which requires transmission of data to the UE when data toward the UE is generated. That is, the AF should be able to transmit data to the UE at any time.

To this end, the AF makes a request for subscribing to a monitoring UE IP address service, which is a UPF service proposed in the disclosure. The service name and the parameter of the subscription request message proposed in the disclosure are not limited to the values enumerated in the disclosure.

The AF transmits a Nupf_EventExposure_Request request message to the UPF, based on the UP. The Nupf_EventExposure_Request request message includes at least one of the ID of the UE (for example, GPSI, UE IPv4 address(es), UE IPv6 prefix(es), UE medium access control (MAC) address(es), an external group identifier, and the like), a public IP address of the UE, a port number of the UE, the ID of the AF, a public IP address of the AF, and a port number of the AF. The event ID is allocated to a monitoring UP IP address. The event ID may be changed to a different name. In addition, parameters of the message are not limited to the values enumerated herein.

The UPF transmits a Nupf_EventExposure_Request response message to the AF to provide a result of the service subscription. At this time, the Nupf_EventExposure_request Response message may include the UE ID and the public IP address of the UE.

When an event occurs in the NAT mapping table entry subscribed by the AF, the UPF transmits a Nupf_EventExposure _Notify message to the AF. Events that may occur here may include the case in which a timer tagged in the entry is about to expire or has expired, the case in which the UE is deregistered and the entry is deleted, the case in which the UE has been assigned a new public IP address, or the like. The UPF transmits a notification regarding an event occurring at the public IP address and the private IP address of the UE to the AF through the Nupf_EventExposure_Notify message. In addition, the notification message may include the remaining time of the tagged timer, the newly allocated UE public IP address, and the like. The above-mentioned events which may occur or message parameters are only examples, and events which may occur or message parameters according to various embodiments of the disclosure are not limited to the above examples.

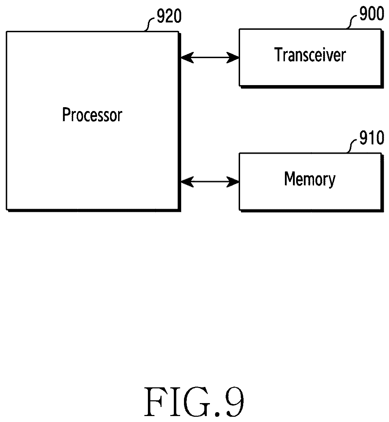

FIG. 9 illustrates a structure of a UE according to an embodiment of the disclosure.

The UE according to an embodiment of the disclosure may include a processor 920 which controls the overall operation of the UE, a transceiver 900 which includes a transmitter and a receiver, and a memory 910. Of course, the example given above is not limiting, and the UE may include a smaller or larger number of components than the components illustrated in FIG. 9.

According to an embodiment of the disclosure, the transceiver 900 may transmit/receive signals with network entities or other UEs. The signals transmitted/received with network entities may include control information and data. In addition, the transceiver 900 may receive signals through a radio channel, output the same to the processor 920, and transmit signals output from the processor 920 through the radio channel.

According to an embodiment of the disclosure, the processor 920 may control the UE to perform operations according to any one of the above-described embodiments. Of course, the processor 920, the memory 910, and the transceiver 900 are not necessarily implemented as separate modules, but may be implemented as a single component unit such as a single chip. Also, the processor 920 and the transceiver 900 may be electrically connected to each other. In addition, the processor 920 may be an application processor (AP), a communication processor (CP), a circuit, an application-specific circuit, or at least one processor.

According to an embodiment of the disclosure, the memory 910 may store data such as basic programs for operations of the UE, application programs, and configuration information. In particular, the memory 910 provides the stored data at the request of the processor 920. The memory 910 may include storage media such as a ROM, a RAM, a hard disk, a CD-ROM, and a DVD, or a combination of storage media. In addition, the memory 910 may include multiple memories. Furthermore, the processor 920 may perform the above-described embodiments of the disclosure, based on the programs for performing the embodiments, stored in the memory 910.

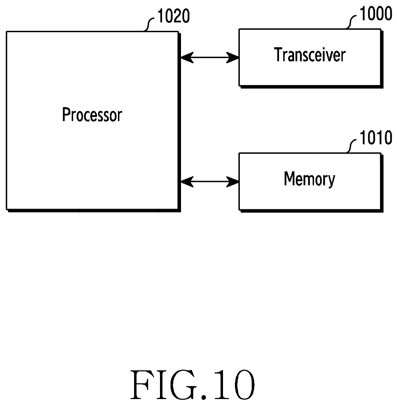

FIG. 10 illustrates a structure of a base station (BS) according to an embodiment of the disclosure.

As illustrated in FIG. 10, the base station of the disclosure may include a processor 1020, a transceiver 1010, and a memory 1020. However, components of the base station are not limited to the above-described example. For example, the base station may include a larger or smaller number of components than the above-described components. In addition, the processor 1020, the transceiver 1000, and the memory 1010 may be implemented in the form of a single chip.

The processor 1020 may control a series of processes such that the base station can operate according to the above-described embodiments of the disclosure. For example, according to an embodiment of the disclosure, the processor 1020 may control the components of the base station to perform the UE scheduling method according to whether the base station mode is a base station energy saving mode or a base station normal mode. The processor 1020 may include one or multiple processors, and the processor 1020 may execute programs stored in the memory 1010 to thereby perform the method for scheduling the UE according to whether the above-described base station mode is a base station energy saving mode or a base station normal mode.

The transceiver 1000 may transmit/receive signals with the UE. The signals transmitted/received with UEs may include control information and data. The transceiver 1000 may include an RF transmitter configured to up-convert and amplify the frequency of transmitted signals, an RF receiver configured to low-noise-amplify received signals and down-convert the frequency thereof, and the like. However, this is only an embodiment of the transceiver 1000, and the components of the transceiver 1000 are not limited to the RF transmitter and the RF receiver. In addition, the transceiver 1000 may receive signals through a radio channel, output the same to the processor 1020, and transmit signals output from the processor 1020 through the radio channel.

According to an embodiment, the memory 1010 may store programs and data necessary for the operation of the base station. In addition, the memory 1010 may store control information or data included in signals transmitted/received by the base station. The memory 1010 may include storage media such as a ROM, a RAM, a hard disk, a CD-ROM, and a DVD, or a combination of storage media. In addition, the memory 1010 may include multiple memories. According to an embodiment, the memory 1010 may store programs for performing the method for scheduling the UE according to whether the base station mode in the above-described embodiments of the disclosure is a base station energy saving mode or a base station normal mode.

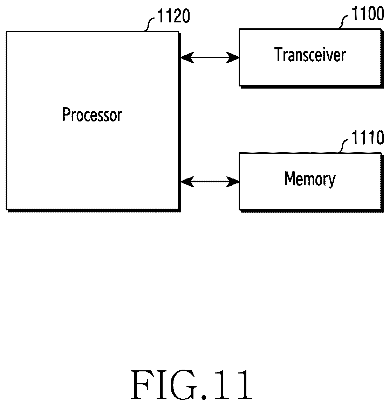

FIG. 11 illustrates a structure of a network entity according to an embodiment of the disclosure.

The network entity according to an embodiment of the disclosure may include a processor 1120 which controls the overall operation of the network entity, a transceiver 1100 which includes a transmitter and a receiver, and a memory 1110. Of course, the example given above is not limiting, and the network entity may include a smaller or larger number of components than the components illustrated in FIG. 11.

According to an embodiment of the disclosure, the transceiver 1100 may transmit/receive signals with at least one of other network entities or UEs. The signals transmitted/received with at least one of other network entities or UEs may include control information and data.

According to an embodiment of the disclosure, the processor 1120 may control the network entity to perform operations according to any one of the above-described embodiments. Of course, the processor 1120, the memory 1110, and the transceiver 1100 are not necessarily implemented as separate modules, but may be implemented as a single component unit such as a single chip. Also, the processor 1120 and the transceiver 1100 may be electrically connected to each other. In addition, the processor 1120 may be an application processor (AP), a communication processor (CP), a circuit, an application-specific circuit, or at least one processor.

According to an embodiment of the disclosure, the memory 1110 may store data such as basic programs for operations of the network entity, application programs, and configuration information. In particular, the memory 1110 provides the stored data at the request of the processor 1120. The memory 1110 may include storage media such as a ROM, a RAM, a hard disk, a CD-ROM, and a DVD, or a combination of storage media. In addition, the memory 1110 may include multiple memories. Furthermore, the processor 1120 may perform the above-described embodiments of the disclosure, based on the programs for performing the embodiments, stored in the memory 1110.

It should be noted that the above-described configuration diagrams, illustrative diagrams of control/data signal transmission methods, illustrative diagrams of operation procedures, and structural diagrams are not intended to limit the scope of the disclosure. That is, all constituent elements, entities, or operation steps described in the embodiments of the disclosure should not be construed as being essential for the implementation of the disclosure, and the disclosure may be implemented without impairing the essential features of the disclosure by including only some constituent elements. Also, the above respective embodiments may be employed in combination, as necessary. For example, the methods proposed in the disclosure may be partially combined with each other to operate a network entity and a terminal.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of an entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. As an example, a part of a first embodiment of the disclosure may be combined with a part of a second embodiment to operate a base station and a terminal. Moreover, although the above embodiments have been described based on the 5G or NR system, other variants based on the technical idea of the embodiments may also be implemented in other communication systems such as LTE, LTE-A, or LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a user plane function (UPF) entity in a wireless communication system, the method comprising:
receiving a subscription request for a service of monitoring an Internet protocol (IP) address of a user equipment (UE) from an application function (AF) entity;
transmitting a response to the subscription request to the AF entity; and
in case that an event occurs in a network address translation (NAT) mapping table entry for supporting the service, transmitting a notification for the event to the AF entity before a timer tagged in the entry expires,
wherein the event includes at least one of an event associated with expiration of the timer tagged in the entry, an event associated with deletion of the entry, and an event in which a new public IP address is alocated to the UE, and
wherein the notification includes at least one of a remaining time of the timer or the new public IP address allocated to the UE.

2. The method of claim 1, wherein the subscription request includes at least one of a monitoring user plane (UP) IP address, an IP address of the UE, an identifier (ID) of the UE, a generic public subscription identifier (GPSI), a data network name (DNN), single network slice selection assistance information (S-NSSAI), an IPv4 address of the UE, an IPv6 prefix of the UE, a medium access control (MAC) address of the UE, an external group identifier, a public IP address of the UE, a port number of the UE, an ID of the AF entity, a public IP address of the AF entity, or a port number of the AF entity, and
wherein the response to the subscription request includes at least one of the identifier (ID) of the UE, the generic public subscription identifier (GPSI), the IPv4 address of the UE, the IPv6 prefix of the UE, the medium access control (MAC) address of the UE, the external group identifier, or the public IP address of the UE.

3. The method of claim 1, wherein the receiving of the subscription request from the AF entity comprises receiving the subscription request from the AF entity through a UPF control message protocol (UCMP) protocol included in an IP layer of the UPF entity.

4. The method of claim 1, wherein the receiving of the subscription request from the AF entity comprises receiving the subscription request from the AF entity sequentially through a network exposure function (NEF) entity, a unified data management (UDM) entity, and a session management function (SMF) entity serving the UPF entity.

5. A method performed by an application function (AF) entity in a wireless communication system, the method comprising:
transmitting a subscription request for a service of monitoring an Internet protocol (IP) address of a user equipment (UE) to a user plane function (UPF) entity;
receiving a response to the subscription request from the UPF entity; and
in case that an event occurs in an entry of a network address translation (NAT) mapping table for supporting the service, receiving a notification for the event from the UPF entity before a timer tagged in the entry expires,
wherein the event includes at least one of an event associated with expiration of the timer tagged in the entry, an event associated with deletion of the entry, and an event in which a new public IP address is allocated to the UE, and
wherein the notification includes at least one of a remaining time of the timer or the new public IP address allocated to the UE.

6. The method of claim 5, wherein the subscription request includes at least one of a monitoring user plane (UP) IP address, an IP address of the UE, an identifier (ID) of the UE, a generic public subscription identifier (GPSI), a data network name (DNN), single network slice selection assistance information (S-NSSAI), an IPv4 address of the UE, an IPv6 prefix of the UE, a medium access control (MAC) address of the UE, an external group identifier, a public IP address of the UE, a port number of the UE, an ID of the AF entity, a public IP address of the AF entity, or a port number of the AF entity, and
wherein the response to the subscription request includes at least one of the identifier (ID) of the UE, the generic public subscription identifier (GPSI), the IPv4 address of the UE, the IPv6 prefix of the UE, the medium access control (MAC) address of the UE, the external group identifier, or the public IP address of the UE.

7. The method of claim 5, wherein the transmitting of the subscription request to the UPF entity comprises transmitting the subscription request to the UPF entity through a UPF control message protocol (UCMP) protocol included in an IP layer of the UPF entity.

8. The method of claim 5, wherein the transmitting of the subscription request to the UPF entity comprises transmitting the subscription request to the UPF entity sequentially through a network exposure function (NEF) entity, a unified data management (UDM) entity, and a session management function (SMF) entity serving the UPF.

9. A user plane function (UPF) entity in a wireless communication system, the UPF entity comprising:
a transceiver; and
a controller coupled with the transceiver,
wherein the controller is configured to:
receive a subscription request for a service of monitoring an Internet protocol (IP) address of a user equipment (UE) from an application function (AF) entity;
transmit a response to the subscription request to the AF entity; and
in case that an event occurs in a network address translation (NAT) mapping table entry for supporting the service, transmit a notification for the event to the AF entity before a timer tagged in the entry expires,
wherein the event includes at least one of an event associated with expiration of the timer tagged in the entry, an event associated with deletion of the entry, and an event of allocating a new public IP address to the UE, and
wherein the notification includes at least one of a remaining time of the timer or the new public IP address allocated to the UE.

10. The UPF entity of claim 9, wherein the subscription request includes at least one of a monitoring user plane (UP) IP address, an IP address of the UE, an identifier (ID) of the UE, a generic public subscription identifier (GPSI), a data network name (DNN), single network slice selection assistance information (S-NSSAI), an IPv4 address of the UE, an IPv6 prefix of the UE, a medium access control (MAC) address of the UE, an external group identifier, a public IP address of the UE, a port number of the UE, an ID of the AF entity, a public IP address of the AF entity, or a port number of the AF entity, and
wherein the response to the subscription request includes at least one of the identifier (ID) of the UE, the generic public subscription identifier (GPSI), the IPv4 address of the UE, the IPv6 prefix of the UE, the medium access control (MAC) address of the UE, the external group identifier, or the public IP address of the UE.

11. The UPF entity of claim 9, wherein the controller is configured to receive the subscription request from the AF entity through a UPF control message protocol (UCMP) protocol included in an IP layer of the UPF entity.

12. The UPF entity of claim 9, wherein the controller is configured to receive the subscription request from the AF entity sequentially through a network exposure function (NEF) entity, a unified data management (UDM) entity, and a session management function (SMF) entity serving the UPF entity.

13. An application function (AF) entity in a wireless communication system, the AP entity comprising:
a transceiver;
a controller coupled with the transceiver,
wherein the controller is configured to:
transmit a subscription request for a service of monitoring an Internet protocol (IP) address of a user equipment (UE) to a user plane function (UPF) entity;
receive a response to the subscription request from the UPF entity; and
in case that an event occurs in an entry of a network address translation (NAT) mapping table for supporting the service, receive a notification for the event from the UPF entity before a timer tagged in the entry expires,
wherein the event includes at least one of an event associated with expiration of the timer tagged in the entry, an event associated with deletion of the entry, and an event of allocating a new public IP address to the UE, and
wherein the notification includes at least one of a remaining time of the timer or the new public IP address allocated to the UE.

14. The AF entity of claim 13, wherein the subscription request includes at least one of a monitoring user plane (UP) IP address, an IP address of the UE, an identifier (ID) of the UE, a generic public subscription identifier (GPSI), a data network name (DNN), single network slice selection assistance information (S-NSSAI), an IPv4 address of the UE, an IPv6 prefix of the UE, a medium access control (MAC) address of the UE, an external group identifier, a public IP address of the UE, a port number of the UE, an ID of the AF entity, a public IP address of the AF entity, or a port number of the AF entity, and
wherein the response to the subscription request includes at least one of the identifier (ID) of the UE, the generic public subscription identifier (GPSI), the IPv4 address of the UE, the IPv6 prefix of the UE, the medium access control (MAC) address of the UE, the external group identifier, or the public IP address of the UE.

15. The AF entity of claim 13, wherein the controller is configured to:
transmit the subscription request to the UPF entity through a UPF control message protocol (UCMP) protocol included in an IP layer of the UPF entity, or
transmit the subscription request to the UPF entity sequentially through a network exposure function (NEF) entity, a unified data management (UDM) entity, and a session management function (SMF) entity serving the UPF.
